# EUROPEAN PATENT APPLICATION

(11) **EP 1 394 588 A2**
(43) Date of publication of application: **03.03.2004**
(21) Application number: 03255090.7
(22) Date of filing: 15.08.2003
(51) Int. Cl.: G02B 6/44

(54) **Blocking device for optical fibre cable**

(30) Priority: 20.08.2002 GB 0219324; 09.06.2003 GB 0313279
(71) Applicant: SPIRENT PLC, Crawley, West Sussex RH10 2QL (GB)
(72) Inventor: Badman, Matthew, Plymstock, Plymouth PL9 7RJ (GB)
(74) Representative: Gibson, Stewart Harry

(57) **Abstract**

A blocking device for an optical fibre cable comprises a body of elastomeric material formed with a through-passage, the through-passage having a section for receiving and embracing the sheathed-cable and a reduced-diameter section for receiving and embracing a length of cable from which the cable sheath has been removed. The blocking device is used to seal the cable, therefore preventing water or grease to migrate along the cable, under the sheath, and to emerge into a splice enclosure.

## Description

The present invention relates to a blocking device for optical fibre cables entering a splice enclosure.

Typically optical fibre cables entering a splice enclosure comprise a number of optical fibres enclosed within a tubular sheath: there may be a single fibre, or two fibres, or in general any number of fibres, but commonly up to 8 to 12 fibres. There is a risk that the cable sheath may become damaged, at some point along the length of the cable, then with the risk that water or grease might migrate along the cable, under the sheath, and emerge into the splice enclosure through the end of the sheath.

We have now devised a device for preventing water or grease migrating along the optical fibre cable and emerging into the splice closure.

In accordance with the present invention, there is provided a blocking device for an optical fibre cable, the cable comprising one or more optical fibres enclosed within a tubular sheath, the blocking device comprising a body of elastomeric material which is formed with a through-passage, the through-passage having a section for receiving and embracing the sheathed-cable and a reduced-diameter section for receiving and embracing a length of cable from which the cable sheath has been removed.

Preferably opposite sides of the body of the device are formed with grooves, arranged for engagement by ribs in the opposite sides of an entry port of a splice storage tray.

Preferably the body of the device includes a portion projecting from at least one of its opposite ends, the through-passage extending through this projecting portion, to provide support for the cable.

Preferably, the reduced-diameter section of the through-passage is adjacent one end of this passage.

An embodiment of the present invention will now be described by way of example only and with reference to the accompanying drawings, in which:
Figure 1 is an enlarged, longitudinal section through a blocking device in accordance with the invention;
Figure 2 is a further-enlarged sectional view of part of the bore through the blocking device of Figure 1;
Figure 3 is a similar view to Figure 1, showing the end of an optical fibre cable prepared for insertion through the blocking device; and
Figure 4 is a longitudinal section through the blocking device, shown with the end of the optical fibre cable passed through the device and the device inserted into an entry port of a splice storage tray of an enclosure.

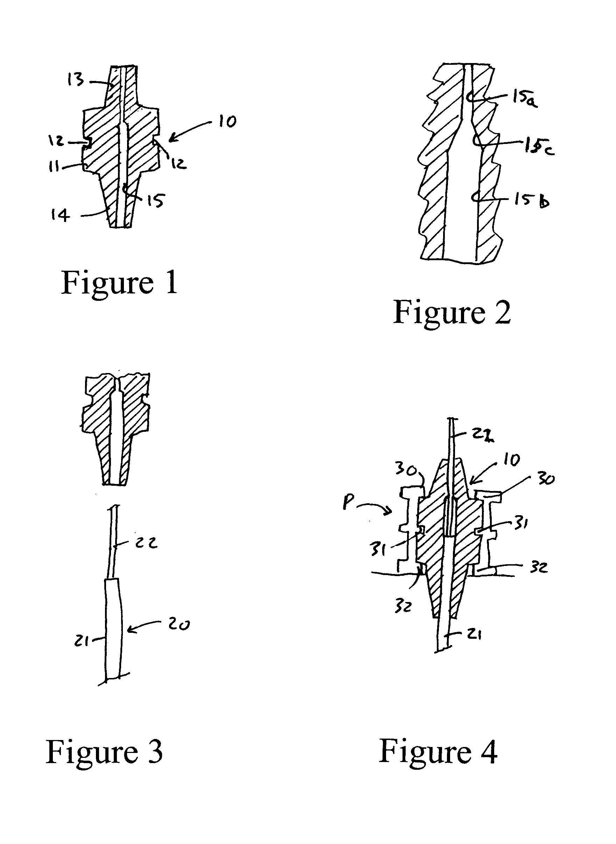

Referring to Figure 1 of the drawings, there is shown a blocking device which comprises a body 10 of elastomeric material, the body 10 having a centre portion 11 of rectangular cross-section, with grooves 12 in its opposite sides and tapering portions 13, 14 projecting from its opposite ends. A bore or passage 15 extends through the body 10, from end-to-end along its longitudinal axis. As shown more clearly in Figure 2, bore or passage 15 includes a reduced-diameter section 15a adjacent one end, joining the remainder 15b of the passage 15 via a tapered section 15c. In the example shown, the main section 15b of the passage 15 has a diameter in the range of 1.7 to 2.0mm, whilst the reduced-diameter section 15a has a diameter in the range of 0.8 to 1.1mm.

In use, an optical fibre cable 20 is passed into a splice enclosure, through a cable locking and sealing device inserted into a port in the base of the enclosure: typically the cable locking and sealing device comprises a device in accordance with our UK patent No. 2,277,206. The end of the cable 20 is then prepared and passed through the passage 15 in the blocking device 10: firstly, as shown in Figure 3, an end section of the cable sheath 21 is cut back, to reveal the end sections of the optical fibres enclosed within a coating or inner sheath 22. In the example under discussion, the cable comprises 2 optical fibres, each typically of 0.8mm, enclosed within an outer sheath 21 typically of 1.8mm outer diameter. Further, a strain-relieving filament (not shown) extends longitudinally of the cable, alongside the fibres, and the end section of this is cut away. The inner sheath 22 of the cable is then lubricated with a rubber lubricant and the cable end is passed through the passage 15 in the blocking device.

The final position of the cable is shown in Figure 4, in which the end of the outer sheath 21 is located within the larger-diameter main section 15b of the bore or passage 15, and the optical fibres, enclosed within their coating or inner sheath 22, lie within the reduced-diameter end section 15a of the passage 15, and are embraced by the surrounding material of the body, typically over a length of 5 or 6mm. In this way, the blocking device seals around the end of the outer cable sheath 21 and also seals around the coating or inner sheath 22 which encloses the optical fibres, and so prevents any water or grease, migrating along the cable within its sheath, from entering the enclosure.

Once the cable has been inserted into the sealed position shown in Figure 4, the blocking device is inserted into an entry port P in a splice storage tray: the port P comprises an open-top channel, having opposite walls formed with spaced-apart ribs 30, 32 and with intermediate ribs 31. The blocking device is inserted into the port P so that the ribs 31 of the port engage into the grooves 12 of the blocking device, and the opposite ends of the centre section 11 of the blocking device locate between the ribs 30, 32 of the port.

It will be appreciated that the tapering portions 13, 14, projecting from the opposite ends of the centre section 11 of the device, serve to provide reinforcement for protecting the cable against excessive bending where it enters or leaves the device.

Further, the application of lubricant to the end of the cable, serves to fill the annular space between the outside of the inner sheath 22 and the inner surface of the larger-diameter section 15b of the through-passage 15, extending from the cut-back end of the outer sheath 21 to the adjacent end of the reduced-diameter section 15a of the through-bore.

## Claims

1. A blocking device for an optical fibre cable, the cable comprising one or more optical fibres enclosed within a tubular sheath, the blocking device comprising a body of elastomeric material which is formed with a through-passage, the through-passage having a section for receiving and embracing the sheathed-cable and a reduced-diameter section for receiving and embracing a length of cable from which the cable sheath has been removed.

2. A blocking device as claimed in claim 1, in which opposite sides of said body are formed with transverse grooves.

3. A blocking device as claimed in claim 1 or 2, in which said reduced-diameter section of said through-passage is disposed adjacent one end of said passage.

4. A blocking device as claimed in any preceding claim, in which said body includes a portion projecting from at least one of its opposite ends, said through-passage extending through said projecting portion to provide support for the cable passed through said passage.
